# EUROPÄISCHE PATENTSCHRIFT

(11) **EP 1 350 694 B1**
(45) Veröffentlichungstag und Bekanntmachung des Hinweises auf die Patenterteilung: **01.09.2004**
(21) Anmeldenummer: 03007509.7
(22) Anmeldetag: 01.04.2003
(51) Int. Cl.: B60R 21/34

(54) **Fronthaube mit aktiver Sicherheit**
Active safety bonnet
Capot moteur à sécurité active

(30) Priorität: 03.04.2002 DE 10214602
(43) Veröffentlichungstag der Anmeldung: 08.10.2003
(73) Patentinhaber: DaimlerChrysler AG, 70567 Stuttgart (DE)
(72) Erfinder: Baumann, Karl-Heinz, 71149 Bondorf (DE); Binder, Stefan, 71155 Altdorf (DE); Frank, Thomas, 70619 Stuttgart (DE); Kinnerle, Rolf, 72141 Walddorfhäslach (DE); Michalak, Frank, 71120 Grafenau (DE); Rathje, Klaus, 71157 Hildrizhausen (DE)

(56) Entgegenhaltungen:
- WO-A-01/23225
- DE-A- 19 710 417
- US-A1- 2002 017 409

## Beschreibung

Die Erfindung betrifft ein Verfahren zum Öffnen bzw. Schließen einer Fronthaubenanordnung gemäß Patentanspruch 16.

Derweil gehen viele Automobilhersteller den Weg einer entweder hinten und/oder vorn aufstellbaren Haube. Dabei gibt es viele Möglichkeiten für eine Auslösung einer solchen aktiven Fronthaube. Häufig ist eine Kontaktsensierung, d.h. eine Sensierung des Fußgängeranpralls im Bereich des Stoßfängers, vorgesehen, welche z.B. über eine Pyrotechnik einen Federspeicher entriegelt, wodurch die Haube in relativ kurzer Zeit in ihre Schutzposition überführt wird. Bei einer Kollision mit einem fußgängerähnlichen Hindernis, z.B. einem Fahrbahnbegrenzungspfosten, kann also auch eine Auslösung der aktiven Fronthaube stattfinden, ohne dass es zu einem Aufprall auf der Fronthaube kommt. Der Fahrer muss in einem solchen Fall aber dennoch die Werkstatt aufsuchen, um einerseits die Fronthaube zurückstellen zu lassen und andererseits die Pyrotechnik auswechseln zu lassen.

Weiterhin ist es bekannt, eine aktive Fronthaube mit mehreren, unterschiedlichen Auslösesystemen zu versehen. Dazu wird beispielhaft auf die DE 197 21 565 A1 verwiesen, die eine Sicherheitseinrichtung an einem Fahrzeug zum Schutz von Fußgängern offenbart. Diese bekannte Sicherheitseinrichtung weist ein Stellglied zur Verstellung einer Fronthaube des Fahrzeugs aus einer Ruhe- in eine demgegenüber angehobenen Aufprallposition auf. Dieses Stellglied wirkt mit einem Schloss für die Fronthaube zusammen. In der Ruheposition ist die Fronthaube über ein Fronthaubenschloss verriegelt und über eine Fronthauben-Aufstellfeder zumindest teilweise öffenbar. Das Stellglied wirkt als Entriegelungsvorrichtung für das Schloss, so dass die Fronthaubenanordnung über eine Aufstellfeder in die Aufprallposition überführt wird, sobald das Stellglied aktiviert wird. Zur Unterstützung der Fronthauben-Aufstellfeder ist bei der bekannten Sicherheitsvorrichtung ein zusätzliches Auslösesystem in Form einer Treibladung vorgesehen, durch die ebenfalls eine Überführung der Fronthaube von einer Ruheposition in eine Aufprallposition erfolgen und mit der die Zeit für die Anhebung verkürzt werden kann. Welches Auslösesystem aktiviert wird, hängt von der Geschwindigkeit des Fahrzeugs ab. Bei geringerer Geschwindigkeit wird das Aufstellen nur durch die Aufstellfeder durchgeführt und bei größeren Geschwindigkeiten wird das Aufstellen ausschließlich in Verbindung mit der Treibladungseinrichtung vorgenommen.

Bei dieser Sicherheitsvorrichtung wird zum Aufstellen der Fronthaube das Fronthaubenschloss entriegelt. Damit die Fronthaube dennoch fixiert bleibt und sich nicht unkontrolliert öffnet, ist eine zusätzliche Begrenzungsvorrichtung vorgesehen. Eine solche zusätzliche Begrenzungsvorrichtung bedeutet zusätzlichen Herstellungs- und Montageaufwand.

Wenn das Aufstellen bei der bekannten Fronthaube über die Fronthauben-Aufstellfeder erfolgt und ein Fehlaufstellen stattfindet, d.h. wenn beispielsweise eine vorausschauende Sensorik eine mögliche Kollision mit einem Fußgänger erfasst, diese aber dann nicht stattfindet, so ist ein automatisches Zurückstellen der Fronthaube von der Aufprallposition in die Ruheposition nicht vorgesehen. Das Bedeutet für den Fahrzeugführer, dass er anhalten und aussteigen muss, um die Fronthaube wieder von Hand zu schließen. Somit ist das Aufstellen über die Fronthauben-Aufstellfeder nicht vollständig reversibel. Für das Zurückstellen ist entweder ein zusätzliches System notwendig oder es muss von Hand durchgeführt werden.

Wenn das Aufstellen der Fronthaube über die Treibladung erfolgt, ist ebenfalls kein automatisches Zurückstellen der Fronthaube von der Aufprallposition in die Ruheposition vorgesehen. Hinzu kommt, dass das Stellglied in einer Werkstatt ausgetauscht werden muss, damit eine neue Treibladung eingebaut wird.

Weiterhin ist aus der DE 197 10 417 A1 eine Fronthaube bekannt, die zum Schutz von Fußgängern bei einem Aufprall hinten aufstellbar ist. Als Aktuator für die bekannte Fronthaube wird eine Gasfeder eingesetzte. Das gleiche Prinzing ist aus der US 2002/0017409 A1 bekannt, die dem Oberbegriff des Anspruch 1 entspricht. Als Aktuator wird hier ein Hebelmechanismus verwendet, der über einen elektrischen Antrieb betätigt wird.

Vor dem Hintergrund dieses Standes der Technik liegt der vorliegenden Erfindung die Aufgabe zugrunde, ein Verfahren zum Öffnen bzw. zum Schlieβen einer Fronthaubenanordnung zu schaffen.

Die Aufgabe wird erfindungsgemäß durch ein Verfahren zum Öffnen bzw. Schließen einer zum Fußgängerschutz aufstellbaren Fronthaubenanordnung mit einem ansteuerbaren Stellglied gelöst. Das Stellglied wird dazu eingesetzt, die Fronthaubenanordnung von einer Ruheposition in eine demgegenüber aufgestellte Position und umgekehrt zu überführen. Das Verfahren zeichnet sich dadurch aus, dass das Stellglied mit einem Haubenschloss verbunden ist und dass durch Aktivieren von Mitteln fur eine Haubenentriegelung das Haubenschloss geöffnet wird und durch das Stellglied eine reversible Überführung der Fronthaubenanordnung in die aufgestellte Position erfolgt, von wo aus das weitere Öffnen der Fronthaubenanordnung erfolgt. Das erfindungsgemäße Verfahren bringt den Vorteil mit sich, dass eine eigentlich für den Fußgängerschutz gedachte, reversible Hubbewegung einer Fronthaubenanordnung im vorderen Bereich auch für das Öffnen bzw. Schließen der Fronthaubenanordnung genutzt werden kann. Es wird demnach die Funktion des Fußgängerschutzes mit einer Komfortfunktion kombiniert.

Soll die Fronthaubenanordnung geöffnet werden, wird über die Betätigung der Haubenentriegelung das oder die Motorhaubenschlösser geöffnet. Gleichzeitig bewegt das Stellglied die Fronthaubenanordnung reversibel, beispielsweise elektromotorisch, über die Haubenschlösser in vertikaler Richtung einen bestimmten Weg beispielsweise 20 mm nach oben in Richtung Öffnen. Der Sicherungshaken der Haube kann dabei im Eingriff bleiben. Aus dieser aufgestellten Position kann die Haube nach Entriegeln des Sicherungshakens angehoben werden. Derzeit verwendete Federn, die die Haube nach Betätigung der Haubenentriegelung nach oben gegen den Sicherungshaken schnellen lassen, können damit entfallen. Das Haubenöffnen geschieht dadurch geräuschärmer, also auch komfortabler.

Zum Überführen der Fronthaubenanordnung in die aufgestellte Position kann das Stellglied ausfahren. Dadurch wird es möglich, zum Schließen der Fronthaubenanordnung diese auf das ausgefahrene Stellglied zu legen, wodurch das Stellglied die Fronthaubenanordnung in die Ruheposition überführt und das bzw. die Haubenschlösser geschlossen werden. Beim Schließen der Haube muss also nur noch der Widerstand der Schlösser selbst bis zum Einrasten überwunden werden. Die Haube kann also mit leichtem Druck geschlossen werden. Die Gefahr von Beschädigungen der Fronthaubenanordnung beim Nachdrücken wird reduziert. Die Haube kann daher nur noch so steif ausgelegt werden, dass sie selbst nicht plastisch deformiert. Auch bei dynamischem Zuschlagen, welches, solange die Fronthaubenanordnung geöffnet ist, auf das ausgefahrene Stellglied erfolgt, kann die Haube beim Durchschwingen keine Beschädigungen erzeugen, da das ausgefahrene Stellglied für einen gewissen Abstand von im Motorraum angeordneten Aggregaten sorgt. Sobald die Fronthaubenanordnung auf dem ausgefahrenen Stellglied zum Liegen kommt, wird sie reversibel, beispielsweise elektromotorisch in die Ausgangs- bzw. Ruheposition überführt. Dabei kann ein sehr geringer und präziser Spalt zu festen Fahrzeugkomponenten wie beispielsweise Kotflügeln und Scheinwerfern angefahren werden, der hohen gestalterischen Ansprüchen genügt.

Im folgenden wird die Erfindung anhand den in den Zeichnungen dargestellten Ausführungsbeispielen näher erläutert. Dabei zeigen:
- Fig. 1: einen Längsschnitt durch eine Fronthaubenanordnung mit einem erfindungsgemäßen Stellglied;
- Fig. 2: eine Detailansicht des erfindungsgemäßen Stellglieds gemäß Fig. 1 in drei verschiedenen Positionen sowie
- Fig. 3: eine Detailansicht einer weiteren Ausführungsform des erfindungsgemäßen Stellglieds in drei verschiedenen Positionen.

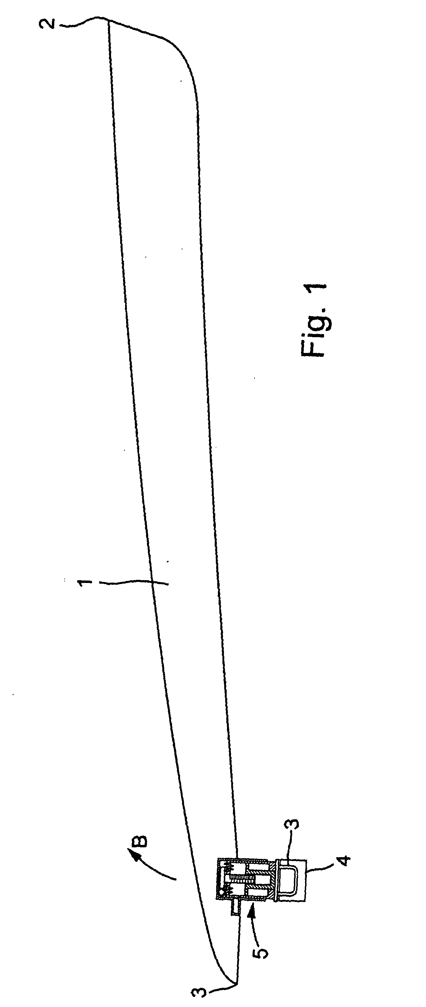

In Fig. 1 ist eine Fronthaube 1 eines Personenkraftwagens dargestellt. Die Fronthaube 1 ist an ihrem der Fahrgastzelle zugewandten Ende 2 in bekannter Weise über nicht dargestellte Scharniere mit dem Fahrzeug schwenkbar verbunden. An ihrem der Fahrgastzelle abgewandten Ende 3 ist ein schematisch dargestelltes Schloss 4 vorgesehen, in welches ein Fronthaubenbügel 5 eingreift. Der Fronthaubenbügel 5 ist nicht direkt mit der Fronthaube 1 sondern über ein Stellglied 6 mit dieser verbunden. Mit Hilfe dieses Stellgliedes 6 kann die Fronthaube 1 bei geschlossenen Schloss 4 an ihrem vorderen Ende 3 angehoben und um die nicht dargestellten Scharniere geschwenkt werden. Auf diese Weise wird der Abstand zwischen Fronthaube 1 und den darunter angeordneten Motorraum-Aggregaten, vergrößert, wodurch die Verletzungsgefahr von mit der Fronthaube kollidierenden Fußgängern erheblich verringert wird.

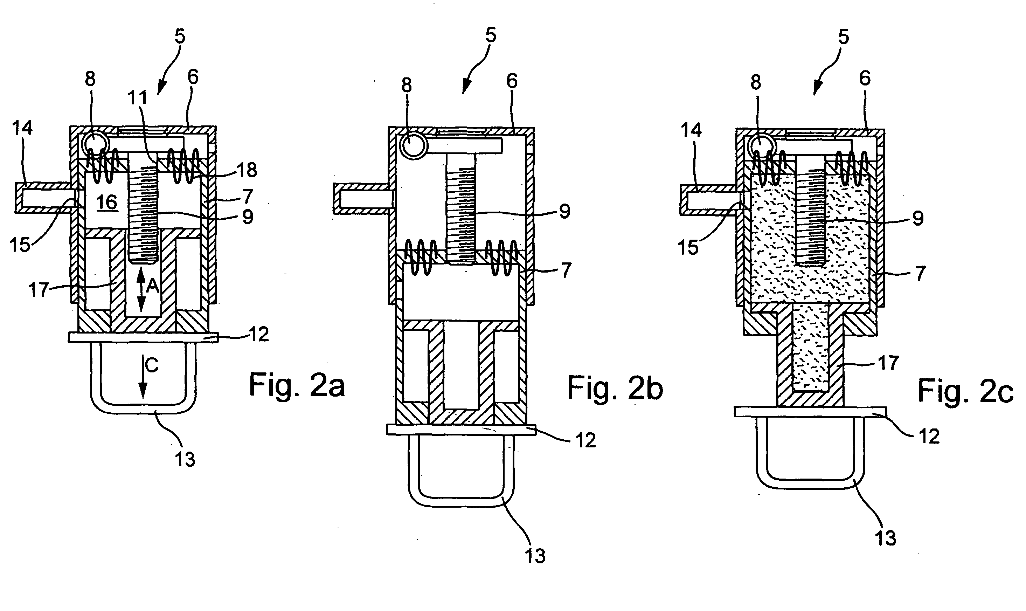

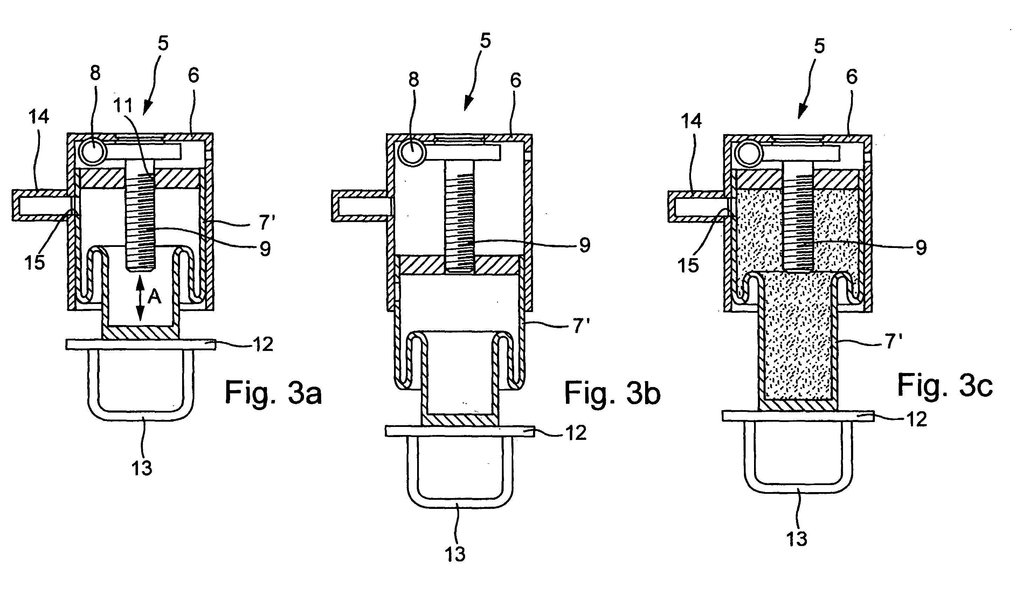

Der Aufbau und die Funktion des erfindungsgemäßen Stellglieds 5 wird nun anhand der Fig. 2 und 3 näher erläutert. Das in Fig. 2 dargestellte Stellglied 5 umfasst ein Gehäuse 6. In dem Gehäuse 6 ist ein Kolben 7 angeordnet. Der Kolben 7 ist beweglich in dem Gehäuse 6 gelagert. Als Antrieb für die Bewegung des Kolbens 7 in dem Gehäuse 6 ist ein nicht dargestellter Elektromotor vorgesehen, der mit einem Schneckenantrieb 8 zusammenwirkt. Der Schneckenantrieb 8 versetzt eine Gewindespindel 9 in Rotation. Die Gewindespindel 8 greift in eine mit einem Innengewinde versehene Bohrung 11 des Kolbens 7 ein. Eine Drehung der Gewindespindel 9 bewirkt eine Bewegung des Kolbens 7 in dem Gehäuse 6 in Richtung des Doppelpfeils A. Der Kolben 8 kann in dem Gehäuse 6 also nach oben und nach unten bewegt werden.

An dem nach unten weisenden Ende des Gehäuses 6, an dem Kolben 7 anliegend, ist eine Montageplatte 12 vorgesehen, an der ein Bügel 13 befestigt ist. Der Bügel 13 wirkt mit dem Fronthaubenschloss 4 zusammen. In geschlossenem Zustand der Fronthaubenanordnung greift der Bügel 13 in das Fronthaubenschloss 4 ein und wird dort arretiert. Beim Öffnen der Fronthaube 1 und Aufschwenken, um beispielsweise irgendwelche Arbeiten im Motorraum vorzunehmen, wird die Arretierung gelöst und ein Entfernen des Bügels 13 aus dem Schloss 4 ermöglicht.

Wenn nun beispielsweise über eine Nahfeldsensorik eine mögliche Kollision eines Fußgängers mit der Fronthaube 1 erfasst wird, so wird mit Hilfe des Elektromotors über den Schneckenantrieb 8 die Gewindespindel 9 in Rotation versetzt, so dass sich der Kolben 7 aus dem Gehäuse 5 heraus bewegt. Die ausgefahrene Position ist in Fig. 2b dargestellt. Wenn - wie in Fig. 1 dargestellt - das erfindungsgemäße Stellglied frontseitig angeordnet ist und der Bügel 13 in das Fronthaubenschloss 4 eingreift, vergrößert sich aufgrund der Bewegung des Kolbens 7 in dem Gehäuse 5 der Abstand zwischen dem vorderen Ende der Fronthaube 1 und dem darunter angeordneten Motorraum. Die Fronthaube wird in diesem Bereich im dargestellten Ausführungsbeispiel um ca. 25 mm angehoben. Die Fronthaube 1 wird dabei also um die nicht dargestellten Scharniere in Richtung des Pfeils B in eine Schutzposition verschwenkt. Der Bügel 13 bleibt dabei die ganze Zeit in Eingriff mit dem Schloss 4. Das verhindert ein ungewolltes Öffnen der Fronthaube 1.

Weil für den Antrieb des Kolbens 7 ein Elektromotor verwendet wird, lässt sich der Kolben 7 auf sehr einfache Art und Weise von der in Fig. 2b dargestellten ausgefahrenen Position in die in Fig. 2a dargestellten Ausgangsposition überführen. Die Gewindespindel 9 muss dazu nur in entgegengesetzte Richtung gedreht werden. Die beschriebene konstruktive Anordnung stellt somit eine einfache Möglichkeit für einen reversiblen Aktuator zum Überführen einer Fronthaube 1 in eine Schutzposition dar.

Das beschriebene reversible Überführen der Fronthaubenanordnung 1, kann auch zum Öffnen bzw. Schließen derselben verwendet werden. Dadurch können zum einen die derzeit verwendeten Federn, die die Fronthaubenanordnung nach Betätigen der Haubenentriegelung nach oben gegen einen Sicherungshaken schnellen lassen, entfallen. Das Haubenöffnen geschieht dadurch sehr geräuscharm, wodurch die Haube einen soften und soliden Eindruck vermittelt. Beim Schließen bringt die Verwendung des erfindungsgemäßen Stellgliedes den Vorteil mit sich, dass die Fronthaubenanordnung mit geringerer Steifigkeit ausgelegt werden kann, was unter anderem zusätzliche Vorteile bezüglich des Fußgängerschutzes mit sich bringt, da die Verletzungsgefahr verringert wird. Weiterhin ist die geringere Steifigkeit mit einer Gewichtseinsparung sowohl an der Fronthaubenanordnung als auch an der Karosserie verbunden, da geringere Kräfte beim Schließen der Fronthaubenanordnung auftreten. Hinzukommt, dass dadurch, dass die Fronthaubenanordnung elektromotorisch in eine bündige Position mit dem Fahrzeug bewegt wird und das Schließen nicht durch dynamisches Zuschlagen erfolgt, die Fronthaubenanordnung mit geringeren vertikalen Spalten zum Fahrzeug darstellbar ist. Besondere Relevanz bekommt dieser Vorteil dann, wenn ein Fahrzeug eine seitliche Fronthaubenfuge aufweist.

An dem Gehäuse 6 ist neben dem elektromechanischen Antrieb ein pyrotechnisch initiierter Antrieb vorgesehen. Dieser umfasst eine Treibladung 14. Der Kolben 7 ist hohl ausgeführt und weist eine Ausnehmung 15 auf. In der in Fig. 2a dargestellten Ausgangsposition ist die Ausnehmung 15 so angeordnet, dass sich die bei Zünden der Treibladung 14 entstehende Druckwelle in den Hohlraum 16 des Kolbens 7 entlädt.

In dem Hohlraum 16 ist ein beweglich gelagerter Stempel 17 angeordnet. In der Ausgangsposition ragt der Stempel 17 nicht über den Kolben 7 hinaus. Er ist also komplett in dem Kolben 7 angeordnet.

Wenn nun beispielsweise über eine Kontaktsensorik ein tatsächlicher Unfall erfasst wird, wird die Treibladung 14 gezündet und der dadurch entstehende Druck entweicht in den Kolben 7, woraufhin sich der Stempel 17 in Richtung des Pfeils C in Fig. 2a bewegt und die in Fig. 2c dargestellte Position einnimmt. Der Kolben 7 bleibt von dieser Bewegung unbeeinträchtigt. Die Montageplatte 12 ist mit dem Stempel 17 verbunden und wird aufgrund der Bewegung des Stempels 17 mit dem Bügel 13 ebenfalls in Richtung des Pfeils C bewegt. Ebenso wie bei der zuvor beschriebenen Aufstellung, die aufgrund des Elektromotors erfolgt, vergrößert sich durch die Bewegung des Stempels 17 in dem Kolben 7 der Abstand zwischen dem vorderen Ende der Fronthaube 1 und dem darunter angeordneten Motorraum. Die Fronthaube 1 wird dabei also um die nicht dargestellten Scharniere in Richtung des Pfeils B in eine Schutzposition verschwenkt. Der Bügel 13 bleibt dabei ebenfalls die ganze Zeit in Eingriff mit dem Schloss 4. Das verhindert ein ungewolltes Öffnen der Fronthaube 1 beim Aufstellvorgang zum Schutz von Fußgängern.

Dadurch, dass die Ausnehmung 15 nur dann der Treibladung 14 zugewandt ist, wenn der Kolben 7 seine Ausgangsposition einnimmt und somit der Kolben 7 auch nur dann mit einem Druck beaufschlagt werden kann, kann der Stempel 17 auch nur in dieser Situation aus dem Kolben heraus verfahren werden. In der in Fig. 2b dargestellten Position ist ein Verfahren des Stempels 17 aus diesem nicht möglich. Diese Anordnung bringt den Vorteil mit sich, dass nach Sensierung eines möglichen Unfalls und entsprechender Aufstellung der Fronthaube 1 mit Hilfe des reversiblen Aktuators keine zusätzliche Aktivierung des teilreversiblen Aktuators erfolgen muss, wenn ein tatsächlicher Unfall sensiert wird. Dadurch wird die Gefahr von ungewollten pyrotechnischen Aktivierungen, die zu einem Werkstattaufenthalt führen, erheblich reduziert.

An seiner nach oben weisenden Wandung weist der Kolben 7 nachgiebige Bereiche auf, die hier durch Schlangenlinien 18 symbolisiert sind. Diese nachgiebigen Bereiche, die beispielsweise als faltenbalgartige Gestaltung ausgeführt sein können - haben den Vorteil, dass insbesondere in der ausgefahrenen Stellung Energie beim Fußgängeraufprall über eine Steuerung des Gasdrucks erfolgen kann. Die Steuerung kann auch durch Abblasöffnungen erfolgen. Es wird beim Aufstellen der Haube also keine starre Verbindung erzeugt.

In den Fig. 3a bis 3c ist eine andere Ausführungsform eines erfindungsgemäßen Stellgliedes dargestellt. Diese Ausführungsform unterscheidet sich von der zuvor beschriebenen Ausführungsform dadurch, dass der Kolben 7' keinen darin beweglich angeordneten Stempel aufweist. Vielmehr weist er zwei Bereiche mit unterschiedlichen Durchmessern auf, einen nach oben gewandten Bereich, der in dem Gehäuse 6 angeordnet ist und einen nach unten, in Richtung Bügel 13 gewandten und mit dem Bügel 13 über eine Montageplatte 12 verbundenen Bereich. Der nach oben weisende Bereich des Kolbens 7' hat einen größeren Durchmesser als der nach unten weisende Bereich. Der Übergang zwischen diesen Bereichen erfolgt durch eine Faltung des Materials, so dass sich die beiden Bereiche mit den unterschiedlichen Durchmessern überlappen. Der Kolben 7' hat demnach die Form eines Stülprohres.

Die elektromechanische Aktuatorik ist in diesem Ausführungsbeispiel dieselbe, wie die bei dem zuvor beschriebenen Ausführungsbeispiel. Sie erfolgt über eine Gewindespindel 9, die über ein Schneckenantrieb 8 von einem nicht dargestellten Elektromotor angetrieben wird. Bei der Aktivierung des Stellgliedes 5 mittels dieser Aktuatorik wird der gesamte Kolben 7' aus dem Gehäuse 6 herausgeschoben.

Kommt es zu einer Aktivierung der Fronthaube 1 durch den teilreversiblen Aktuator, so wird ebenfalls die Treibladung 14 gezündet und der dadurch entstehende Druck in den Kolben 7' geleitet. Der Druck bewirkt nun ein Längen des Kolbens 7' durch ein Entfalten des Übergangsbereichs mittels Rollbiegung. Die Montageplatte 12 wird aufgrund des Ausdehnens des Kolbens 7' mit dem Bügel 13 ebenfalls in Richtung des Pfeils C bewegt. Ebenso wie bei der Aufstellung, die aufgrund des Elektromotors erfolgt, vergrößert sich dadurch der Abstand zwischen dem vorderen Ende der Fronthaube 1 und dem darunter angeordneten Motorraum. Die Fronthaube 1 wird dabei also um die nicht dargestellten Scharniere in Richtung des Pfeils B in eine Schutzposition verschwenkt. Der Bügel 13 bleibt dabei ebenfalls die ganze Zeit in Eingriff mit dem Schloss 4. Das verhindert ein ungewolltes Öffnen der Fronthaube 1.

Eine Aufnahme von Aufprallenergie ist in dieser Ausführungsform durch die Gestaltung des Kolbens 7' als Stülprohr ermöglicht. Wenn in der in Fig. 3c dargestellten ausgefahrenen Position des Kolbens 7' eine Kraft auf die Fronthaube 1 gegeben wird, so kann das Stülprohr 7' über seine Wandbereiche, die einer rollenden Biegung unterzogen werden, Aufprallenergieabsorbieren. Auch bei diesem Ausführungsbeispiel wird als keine starre Verbindung zwischen Fronthaube 1 und Motorraum geschaffen.

## Patentansprüche

1. Verfahren zum Öffnen bzw. Schließen einer zum, Fußgängerschutz aufstellbaren Fronthaubenanordnung mit einer Fronthaube (1), einem ansteuerbaren Stellglied (6), durch welches die Fronthaubenanordnung von einer Ruheposition in eine demgegenüber aufgestellte Position und umgekehrt überführt wird, sowie Mitteln für eine Haubenentriegelung,
**dadurch gekennzeichnet , dass** die Fronthaube (1) über das Stellglied (6) mit einem Haubenschloss (4) verbunden ist und
dass durch Aktivieren der Mittel für eine Haubenentriegelung das Haubenschloss (4) geöffnet wird und durch das Stellglied (6) eine reversible Überführung der Fronthaubenanordnung in die aufgestellte Position erfolgt, von wo aus das weitere Öffnen der Fronthaubenanordnung erfolgt.

2. Verfahren nach Anspruch 1,
**dadurch gekennzeichnet,**
**dass** das Stellglied (6) zum Überführen der Fronthaubenanordnung in die aufgestellte Position ausfährt.

3. Verfahren nach Anspruch 1 oder 2,
**dadurch gekennzeichnet,**
**dass** zum Schließen die Fronthaubenanordnung auf das ausgefahrene Stellglied (6) gelegt wird und das Stellglied (6) die Fronthaubenanordnung reversibel in die Ruheposition überführt sowie das Haubenschloss (4) geschlossen wird.

## Claims

1. A process for opening and closing a front hood arrangement which can be raised for the protection of pedestrians having a front hood (1) and a triggerable control element (6) by means of which the front hood arrangement can be switched from a lowered position into a raised position and vice versa, together with means for unlocking the hood,
**characterised in that**
the front hood (1) is connected to a hood lock (4) via the control element (6), the hood lock (4) is opened by activating the means for unlocking the hood and the front hood arrangement is reversibly switched by means of the control element (6) to the raised position from where the front hood arrangement is opened further.

2. A process in accordance with claim 1,
**characterised in that**
the control element (6) extends into the raised position in order to switch the front hood arrangement.

3. A process in accordance with claim I or 2,
**characterised in that**
in order to close the front hood arrangement, said front hood arrangement is placed on the extended control element (6), the control element (6) reversibly switches the front hood arrangement to the lowered position and the hood lock (4) is closed.

## Revendications

1. Procédé pour l'ouverture, respectivement la fermeture d'une disposition de capot avant relevable pour la protection des piétons, avec un capot avant (1) , un vérin excitable (6), par lequel la disposition de capot avant est transférée d'une position de repos dans une position relevée par rapport à cette dernière et inversement, ainsi que moyens pour un déverrouillage du capot, **caractérisé en ce que** le capot avant (1) est relié par l'intermédiaire du vérin (6) à une serrure de capot (4) et **en ce que**, par l'activation des moyens pour un déverrouillage du capot, la serrure du capot (4) est ouverte et un transfert réversible de la disposition de capot avant dans la position relevée s'effectue par le vérin (6), position depuis laquelle s'effectue la suite de l'ouverture de la disposition de capot avant.

2. Procédé selon la revendication 1, **caractérisé en ce que** pour le transfert de la disposition de capot avant dans la position relevée, le vérin(6) se déploie.

3. Procédé selon la revendication 1 ou 2, **caractérisé en ce que** pour la fermeture, la disposition de capot avant est placée sur le vérin (6) déployé, et **en ce que** le vérin (6) transfère la disposition de capot avant de façon réversible dans la position de repos, et aussi **en ce que** la serrure du capot (4) est fermée.
